# EUROPEAN PATENT SPECIFICATION

(11) **EP 1 340 575 B1**
(45) Date of publication and mention of the grant of the patent: **19.10.2005**
(21) Application number: 03425077.9
(22) Date of filing: 10.02.2003
(51) Int. Cl.: B23D 55/10

(54) **Device for controlling the tension of bands applicable in particular to band saws**
Vorrichtung zur Steuerung der Spannung von Bändern insbesondere einsetzbar für Bandsägen
Dispositif pour contrôler la tension de bandes, applicable en particulier à des scies à bande

(30) Priority: 28.02.2002 IT BO20020102
(43) Date of publication of application: 03.09.2003
(73) Proprietor: Femi S.p.A, 40023 Castel Guelfo (Bologna) (IT)
(72) Inventor: Casanova, Sergio, 40024 Castel San Pietro (Bologna) (IT)
(74) Representative: Lanzoni, Luciano

(56) References cited:
- CA-A- 2 313 962
- DE-A- 19 931 250
- GB-A- 1 408 609
- US-A- 2 296 240
- US-A- 4 576 077
- US-A- 6 073 531

## Description

The present invention relates to a device for controlling the tension of bands or blades according to the preamble of claim 1, in particular for band saws such a device is known from US2296240A1, which is considered to represent the closest state of the art.

As is known, prior art band saws comprise a horizontal base with a frame hinged to it, the frame being equipped with two pulleys: a drive pulley and an idle pulley.

A rotating toothed band or blade is fitted around the two pulleys and is driven, through the drive pulley, by a motor mounted on the frame close to the point where it joins the base.

The base also mounts a vice for clamping the workpiece to be cut. An actuating lever positioned at the end of the frame opposite the motor is used to lower the frame onto the base in such a way as to apply the toothed band to the workpiece to be cut.

The looped path followed by every point on the band as it rotates, can be divided into an active cutting section, where the band is in contact with and cuts the workpiece, a drive section, where the drive pulley applies power to the band, and a passive section, where the band is idle.

At the end farthest from the point where the frame is hinged to the base, there is a gripping element used to slacken or tension the toothed band (when adjusting or changing the band itself) by moving the idle pulley towards or away from the drive pulley.

In practice, this element comprises a knob connected to a threaded pin that moves into the frame and is rotatably engaged in a threaded hole made in the structure that mounts the idle pulley.

Turning the knob thus moves the idle pulley and varies its distance from the other pulley so that, depending on circumstances, the band can be changed or its tension adjusted.

This widely accepted solution, however, is not entirely satisfactory in that it does not provide accurate tensioning references since the optimum or maximum tension is achieved using visual references located on the frame or based on the machine operator's experience. This may lead to trouble making precision cuts, rapid blade wear, poor cuts and hence finished work of low quality. It is also known from document US2296240 a chain saw provided with adjustment means for accurately tensioning the saw chain. The adjustment means comprises an adjusting element, a manual actuator for the adjusting element, a friction clutch operatively connecting said actuator with the adjusting element, a single resilient means exerting pressure tending to engage the clutch and operative to resiliently tension said chain, and means for regulating the effective pressure of said resilient means.

The aim of the present invention is to overcome the above mentioned disadvantage through a device for controlling the tension of blades, applicable, in particular, to band saws, and made in such a way as to provide the operator with an immediate, precise indication of optimum band tension, without modifying the basic constructional architecture of traditional band saws.

The above aim is achieved by providing a device for controlling the tension of bands applicable to band saws according to one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a perspective view illustrating a band saw equipped with a device for controlling the tension of the band made according to the present invention;
- Figure 2 is a scaled-up view of the detail A from Figure 1 shown in a side view with some parts cut away in order to better illustrate others;
- Figure 3 is a scaled-up view of the detail B from Figure 2 shown in a side view with some parts cut away and others in cross section.

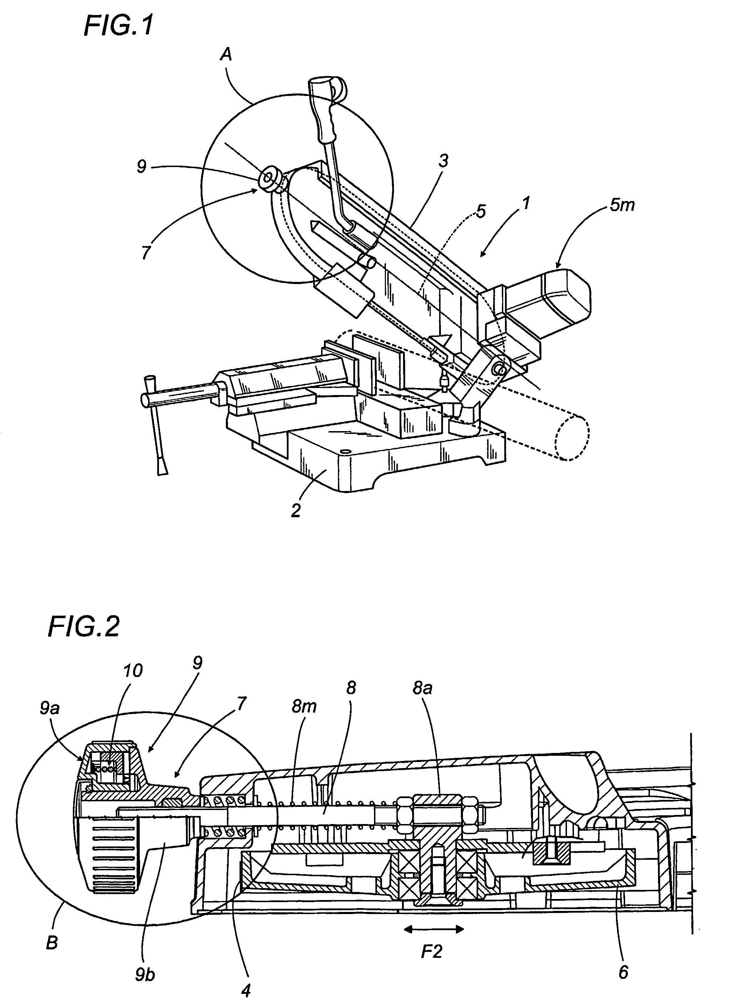

With reference to the accompanying drawings, in particular Figure 1, the device for controlling the tension of bands according to the present invention can be fitted to band saws.

The band saw 1 essentially comprises, insofar as is relevant to the present invention, a base 2 to which a mounting frame 3 is joined, a cutting band or blade 4 that rotates, looped around two pulleys 5 and 6, one of which is driven by a motor 5m, and the other is an idle pulley. Both pulleys 5 and 6 are rotatably mounted at opposite ends of the frame 3.

Close to one of the pulleys 5 and 6 there are adjustment means 7 acting on the pulley 5 or 6 in such a way as to vary the distance between the two pulleys 5, 6 in accordance with the optimum tension of the band 4.

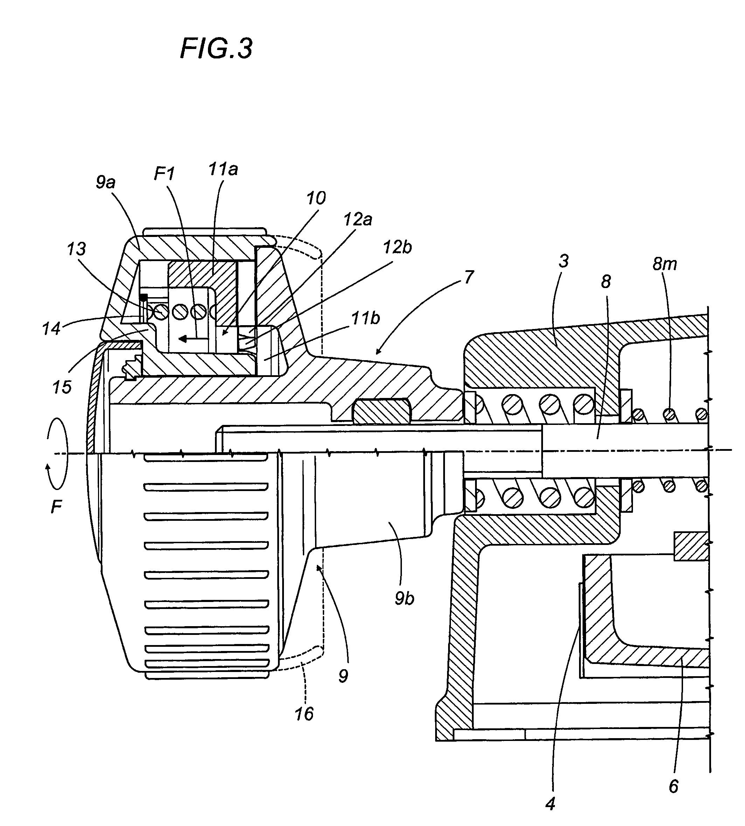

The adjustment means 7 (see also Figures 2 and 3) comprise an actuating element 8, rotatably engaged with the pulley 5, 6, and a control element 9 acting on the actuating element 8 in such a way as to enable the pulley 5, 6 to move in both directions in the same plane as that in which the band 4 extends (see arrow F2), according to the required tension of the band 4.

In a preferred embodiment of the invention, as clearly shown in Figure 2, the adjustment means 7 are associated with the idle pulley 6 and comprise a knob 9, constituting the control element, connected to a pin 8 that is rotatably engaged by threading with the idle pulley 6 and constitutes the actuating element. The idle pulley 6 has a support 8a which is located inside the frame 3 and by which the pin 8 and the idle pulley 6 are coupled to each other. A spring 8m fitted over the pin 8 between the support 8a and the frame 3 helps retain the pin itself.

The adjustment means 7 further comprise means 10 acting on the control element 9 and designed to enable at least one part of the control element 9 to be disengaged from the actuating element 8 when the band 4 has reached the correct tension.

At a structural level (see Figure 3), the knob 9 is divided into two separate parts 9a and 9b, coupled to each other, with the means 10 fitted between them in such a way as to enable the first part 9a of the knob 9 to turn freely relative to the second part 9b when the band 4 reaches the correct tension.

These means may be of the friction clutch type or of the mechanically and elastically controlled type.

In the non-restricting embodiment illustrated by way of example, the means 10 comprise two rings 11a and 11b each associated with one of the two parts 9a and 9b of the knob 9.

The rings 11a and 11b are each equipped with a plurality of front teeth 12a and 12b engaged with each other and designed to enable the knob 9 to be turned in one direction only.

The numeral 13 denotes elastic means acting on the toothed ring 11a of the first part 9a of the knob 9 and designed to enable the front teeth 12a and 12b to be momentarily disengaged as they turn when the band 4 reaches a certain tension, in such a way that the first part 9a of the knob 9 turns freely and then snaps back into place.

Preferably, each of the teeth 12a and 12b has an inclined profile that facilitates its disengagement and re-engagement as just described.

The elastic means 13 consist of a spring fitted between the toothed ring 11a of the first part 9a of the knob 9 and a fixed contact ring 14 associated with a portion 15 or shoulder of the first part 9a.

In practice, the elastic force of the spring 13 is set at the optimum tension of the band 4, so that, when the band 4 reaches the optimum tension by turning the knob 9 (in the direction of the arrow F in Figure 3), the opposing force applied to the spring 13 is greater than the spring setting, thus allowing the toothed ring 11a of the first part 9a of the knob 9 to retract (in the direction of the arrow F1 in Figure 3), causing the teeth 12a and 12b to be disengaged from each other and enabling the first part 9a to turn freely.

Advantageously, the first part 9a of the knob 9 may comprise an outer gripping portion 16 that also partly surrounds the second part 9b without the two parts interfering with each other (see broken line in Figure 3): this would prevent the operator from holding the second part 9b when turning the knob 9, thus improving the efficiency of the tension control device.

A control device made as described above achieves the aforementioned aims thanks to a simple yet effective mechanism that easily performs its task without having to alter the basic structure of the band saw.

The possibility of setting the elastic element makes it possible to adjust the device to provide the optimum tension according to the work to be done by the band saw. Once the knob starts turning freely, the operator knows, without performing any other checks, that the band saw blade is properly tensioned.

It will be understood that the invention can be subject to modifications and variations without thereby departing from the scope of the inventive concept. Moreover, all the details of the invention may be substituted by technically equivalent elements.

## Claims

1. A device for controlling the tension of bands applicable in particular to a band saw; the band saw (1) comprising a base (2), a mounting frame (3) joined to the base (2), a cutting band or blade (4) that rotates, looped around two pulleys (5, 6), a motor-driven pulley (5) and an idle pulley (6), rotatably mounted at opposite ends of the frame (3); there being adjustment means (7) located close to one of the pulleys (5, 6) and acting on the pulley (5, 6) in such a way as to vary the distance between the two pulleys (5, 6) in accordance with band (4) tension; the adjustment means (7) comprising an actuating element (8), rotatably engaged with the pulley (5, 6), and a control element (9) acting on the actuating element (8) in such a way as to enable the pulley (5, 6) to move in both directions according to band (4) tension, the adjustment means (7) further comprising means (10) acting on the control element (9) and being designed to enable at least one part of the control element (9) to be disengaged from the actuating element (8) when the band (4) has reached the correct tension ; the adjustment means (7) being associated with the idle pulley (6) and comprising a knob (9), constituting the control element, connected to a pin (8) that is rotatably engaged by threading with the idle pulley (6) and constitutes the actuating element, the knob (9) being divided into two separate parts (9a, 9b), coupled to each other, with the means (10) fitted between them in such a way as to enable the first part (9a) of the knob (9) to turn freely relative to the second part (9b) when the band (4) reaches the correct tension ; **characterised in that** the means (10) comprise two rings (11a, 11b) each associated with one of the two parts (9a, 9b) of the knob (9) and equipped with a plurality of front teeth (12a, 12b) engaged with each other and designed to enable the knob (9) to be turned in one direction only; the toothed ring (11a) of the first part (9a) being placed inside said first part (9a) and there being elastic means (13) consisting of a spring fitted between the toothed ring (11a) of the first part (9a) of the knob (9) and a fixed contact ring (14) associated with a portion (15) or shoulder of the first part (9a); the elastic means (13) being designed to enable the toothed ring (11a) to retract, when the band (4) reaches a certain tension, thus causing the front teeth (12a, 12b) to be disengaged from each other as the turn in such a way that the first part (9a) of the knob (9) can turn freely and then snap back into place.

2. The device according to claim 1, **characterised in that** each tooth forming part of the first and second pluralities of front teeth (12a, 12b) has an inclined profile.

3. The device according to claim 1, **characterised in that** the first part (9a) of the knob (9) comprises an outer gripping portion (16) that also partly surrounds the second part (9b) so as to prevent the second part (9b) from being held when the knob (9) is being turned.

## Patentansprüche

1. Vorrichtung zur Steuerung der Spannung von Bändern, anbringbar insbesondere an einer Bandsäge; wobei die Bandsäge (1) enthält: einen Sockel (2), einen an den Sockel (2) angeschlossenen Montagerahmen (3), ein sich drehendes Schneidband oder Blatt (4), gewunden um zwei Scheiben (5, 6), eine angetriebene Scheibe (5) und eine leerlaufende Scheibe (6), drehbar montiert an entgegengesetzten Enden des Rahmens (3); wobei Reguliermittel (7) vorgesehen sind, angeordnet dicht an einer der Scheiben (5, 6) und auf die Scheiben (5, 6) auf solche Weise wirkend, dass der Abstand zwischen den beiden Scheiben (5, 6) in Übereinstimmung mit der Spannung des Bandes (4) verändert werden kann; wobei die Reguliermittel (7) ein Aktivierelement (8) enthalten, das drehbar in die Scheibe (5, 6) greift, und ein Betätigungselement (9), das auf das Aktivierelement (8) auf solche Weise wirkt, dass die Scheibe (5, 6) in der Lage ist, sich in beiden Richtungen je nach der Spannung des Bandes (4) zu bewegen, wobei das Regulierelement (7) ausserdem Mittel (10) enthält, die auf das Betätigungselement (9) wirken und dazu bestimmt sind zu ermöglichen, dass wenigstens ein Teil des Betätigungselementes (9) von dem Aktivierelement (8) freigegeben wird, wenn das Band (4) die korrekte Spannung erreicht hat; wobei die Reguliermittel (7) der leerlaufenden Scheibe (6) zugeordnet sind und einen Griff (9) enthalten, der das Betätigungselement bildet, angeschlossen an einen Zapfen (8), der drehbar durch Gewinde mit der leerlaufenden Scheibe (6) verbunden ist und das Aktivierelement bildet, wobei der Griff (9) in zwei getrennte, miteinander gekoppelte Teile (9a, 9b) geteilt ist, und zwar mit den Mitteln (10) auf solche Weise zwischen diesen angeordnet, dass der erste Teil (9a) des Griffes (9) in der Lage ist, sich frei im Verhältnis zu dem zweiten Teil (9b) zu derhen, wenn das Band (4) die korrekte Spannung erreicht hat; **dadurch gekennzeichnet, dass** die Mittel (10) zwei Ringe (11a, 11b) enthalten, jeder einem der beiden Teile (9a, 9b) des Griffes (9) zugeordnet und versehen mit einer Anzahl mit frontalen Zähnen (12a, 12b), die ineinander greifen und dazu bestimmt sind, es dem Griff (9) zu erlauben, in nur eine Richtung gedreht zu werden; wobei der verzahnte Ring (11a) des ersten Teils (9a) im Inneren des genannten ersten Teils (9a) angeordnet ist und elastische Mittel (13) vorhanden sind, bestehend aus einer Feder, die eingesetzt ist zwischen dem verzahnten Ring (11a) des ersten Teils (9a) des Griffes (9) und einem feststehenden Kontaktring (14), welcher einem Abschnitt (15) oder einer Schulter des ersten Teils (9a) zugeordnet ist; wobei die elastischen Mittel (13) dazu bestimmt sind, den verzahnten Ring (11a) in die Lage zu versetzen, sich zurückzuziehen, wenn das Band (4) eine gewisse Spannung erreicht hat, und zu bewirken, dass die frontalen Zähne (12a, 12b) beim Drehen sich auf solche Weise voneinander lösen, dass der erste Teil (9a) des Griffes (9) sich frei drehen und dann in seinen Platz zurückschnappen kann.

2. Vorrichtung nach Patentanspruch 1, **dadurch gekennzeichnet, dass** jeder Zahn, der Teil der ersten und zweiten Anzahlen von frontalen Zähnen (12a, 12b) bildet, ein geneigtes Profil hat.

3. Vorrichtung nach Patentanspruch 1, **dadurch gekennzeichnet, dass** der erste Teil (9a) des Griffes (9) einen äusseren Greifabschnitt (16) enthält, der auch teilweise den zweiten Teil (9b) umgibt, um den zweiten Teil (9b) daran zu hindern, festgehalten zu werden, wenn der Griff (9) gedreht wird.

## Revendications

1. Un dispositif pour contrôler la tension de bandes, applicable en particulier à une scie à bande ; la scie à bande (1) comprenant un bâti (2), un châssis de support (3) associé au bâti (2), une bande ou lame de coupe (4) rotative, enroulée en boucle fermée autour de deux poulies (5, 6), dont une poulie motorisée (5) et une poulie folle (6) montées de façon rotative au niveau d'extrémités opposées du châssis (3) ; des moyens de réglage (7) étant prévus à proximité d'une des poulies (5, 6) et agissant sur la poulie (5, 6) de manière à modifier la distance entre les deux poulies (5, 6) elles-mêmes en fonction de la tension de la bande (4) ; les moyens de réglage (7) comprenant un élément d'actionnement (8), accouplé de façon rotative avec la poulie (5, 6), et un élément de commande (9) agissant sur l'élément d'actionnement (8) de manière à permettre un déplacement dans les deux sens de la poulie (5, 6) en fonction de la tension de la bande (4), les moyens de réglage (7) comprenant en outre des moyens (10) agissant sur l'élément de commande (9) et destinés à permettre le désaccouplement d'au moins une partie de l'élément de commande (9) de l'élément d'actionnement (8) quand la bande (4) a atteint la tension appropriée ; les moyens de réglage (7) étant associés à la poulie folle (6) et comprenant un bouton (9), constituant l'élément de commande, associé à une broche (8) qui est accouplée de façon rotative, par filetage, avec la poulie folle (6) et constitue l'élément d'actionnement, le bouton (9) étant divisé en deux parties (9a, 9b) distinctes, accouplées ensemble, avec les moyens (10) interposés entre elles de manière à permettre à la première partie (9a) du bouton (9) de tourner librement par rapport à la seconde partie (9b) quand la bande (4) atteint la tension appropriée ; ledit dispositif étant **caractérisé en ce que** les moyens (10) comprennent deux bagues (11a, 11b) associées, chacune, à une des deux parties (9a, 9b) du bouton (9) et pourvues d'une pluralité de dents frontales (12a, 12b) en prise réciproque et destinées à permettre la rotation du bouton (9) dans un seul sens ; la bague dentée (11a) de la première partie (9a) étant située à l'intérieur de ladite première partie (9a) et des moyens élastiques (13) étant prévus qui consistent en un ressort interposé entre la bague dentée (11a) de la première partie (9a) du bouton (9) et une bague de contact fixe (14) associée à une partie (15) ou épaulement de la première partie (9a) ; les moyens élastiques (13) étant destinés à permettre à la bague dentée (11a) de se rétracter, quand la bande (4) atteint une tension donnée, entraînant ainsi les dents frontales (12a, 12b) à se désaccoupler les unes des autres durant leur rotation de manière à ce que la première partie (9a) du bouton (9) puisse tourner librement puis se réenclencher.

2. Le dispositif selon la revendication 1, **caractérisé en ce que** chaque dent faisant partie de la première et de la seconde pluralités de dents frontales (12a, 12b) a un profil incliné.

3. Le dispositif selon la revendication 1, **caractérisé en ce que** la première partie (9a) du bouton (9) comprend une portion de prise extérieure (16) qui entoure aussi en partie la seconde partie (9b) de manière à éviter que la seconde partie (9b) elle-même ne soit tenue quand le bouton (9) est tourné.
